(19) Europäisches Patentamt
European Patent Office
Office européen des brevets

(11) Veröffentlichungsnummer : **0 324 338 B1**

# (12) EUROPÄISCHE PATENTSCHRIFT

(45) Veröffentlichungstag der Patentschrift :
**06.05.92 Patentblatt 92/19**

(21) Anmeldenummer : **89100006.9**

(22) Anmeldetag : **02.01.89**

(51) Int. Cl.5 : **C08G 18/10,** C08G 18/12, C08G 18/28, C08G 18/80, D06N 3/14, D06M 15/564, C09D 175/02, B05D 7/12, C14C 11/00

## (54) Verfahren zur Beschichtung mit Polyurethanharnstoffen.

(30) Priorität : **09.01.88 DE 3800435**

(43) Veröffentlichungstag der Anmeldung :
**19.07.89 Patentblatt 89/29**

(45) Bekanntmachung des Hinweises auf die Patenterteilung :
**06.05.92 Patentblatt 92/19**

(84) Benannte Vertragsstaaten :
**AT BE CH DE ES FR GB IT LI NL**

(56) Entgegenhaltungen :
**EP-A- 0 013 890**
**EP-A- 0 034 272**
**GB-A- 1 085 454**

(73) Patentinhaber : **BAYER AG**
**W-5090 Leverkusen 1 Bayerwerk (DE)**

(72) Erfinder : **Thoma, Wilhelm, Dr.**
**Birkenweg 25**
**W-5090 Leverkusen 3 (DE)**
Erfinder : **Pedain, Josef, Dr.**
**Haferkamp 6**
**W-5000 Köln 80 (DE)**
Erfinder : **Kling, Waldemar**
**Sperberweg 1**
**W-5067 Kürten (DE)**

EP 0 324 338 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beschichtung von Substraten mit Polyurethanharnstoffen sowie die solcherart beschichteten Substrate.

Die Beschichtung von textilen Flächengebilden mit Polyurethanharnstoff-Lösungen, deren Gehalt an Lösemitteln bis zu 75 Gew.-% beträgt, gehört zum Stand der Technik. Man kann hierzu vollkommen ausreagierte Polyurethanharnstoffe oder auch solche Polyurethanharnstoffe verwenden, die zur Erzielung ihrer Beschichtungs-Eigenschaften mit einer zweiten Komponente nachvernetzt werden müssen. Beschichtungsmittel dieser zuletzt genannten Art werden z.B. in US-PS 3 711 571 beschrieben. Hierbei werden gelöste Polyurethanharnstoffe mit oxim-blockierten NCO-Vorpolymerisaten gemischt und während einer Hitzebehandlung in einem Trockenkanal ausgehärtet. Es muß also bei der Bereitung der Streich- oder Beschichtungspaste ein Vernetzer zugesetzt werden.

Die EP-A 34 272 betrifft ein Verfahren zur Herstellung velourartiger Oberflächen durch Herstellen von Beschichtungen, wobei man als Bindemittel PUR-Zweikomponenten-Systeme aus einem blockierten NCO-Präpolymerisat und einem PolyaminKomplex und gegebenenfalls Lösungsmittel verwendet, das Beschichtungsmittel aufträgt, auf 30 bis 80°C erwärmt und die Beschichtung dann oberhalb 90°C aushärtet.

In der GB-PS 970 459 wird ein Verfahren zum Verkleben einer Schaumfolie mit einem textilen Substrat beschrieben. Bei dem Klebstrich handelt es sich um ein Reaktivgemisch, bestehend im wesentlichen aus einem ketoximblockierten NCO-Prepolymer und N,N,N',N'-Tetrakis-(2-hydroxypropyl)-ethylendiamin als Vernetzer.

Dieses System härtet über Urethangruppen und nicht über Harnstoffgruppen aus. Wesentlich ist auch hier, daß der Streichpaste eine Reaktivkomponente vor der Verarbeitung zugesetzt wird.

In der DE-OS 2 902 090 (≙ US-PS 4 248 756) werden Zweikomponenten-Beschichtungssysteme aus ketoxim-blockierten Prepolymeren und u.a. 4,4'-Diamino-3,3'-dimethyldicyclohexylmethan als Vernetzer/Härter mit ≦15 Gew.-% Lösemittel in der Zubereitung beansprucht. Die Vernetzungsreaktion erfolgt in einem Schritt bei Temperaturen von 120 bis 190°C, vorzugsweise 140 bis 170°C. Bei diesen Beschichtungssystemen beobachtet man einen starken thermischen Viskositätsabfall vor der Reaktion der blockierten NCO-Prepolymere mit dem Vernetzer-Polyamin. Dieser Viskositätsabfall bereitet Penetrationsprobleme in der Direktbeschichtung und Kaschierung, die durch spezielle Maßnahmen überspielt werden müssen. Das erfindungsgemäße Verfahren zur Beschichtung mit Polyurethanharnstoffen vermeidet die Nachteile der bekannten Beschichtungsverfahren.

Dieses neue Verfahren zur Beschichtung mit Polyurethanharnstoffen ist dadurch gekennzeichnet, daß man ein Substrat mit einem Produkt, das durch Reaktion A) eines durchschnittlich 2 ketoxim-blockierte NCO-Gruppen aufweisenden Prepolymers mit einem durchschnittlichen Molekulargewicht von 500 bis 15 000 auf Basis eines aromatischen Polyisocyanats mit B) einem Kettenverlängerer der Formel

$$H_2N-R'-NH_2,$$

in der R' für einen aliphatischen Rest steht, in Gegenwart von Lösungsmitteln bei Temperaturen >50°C und bei einem Äquivalentverhältnis von blockierten NCO-Gruppen zu $NH_2$-Gruppen von 1,43 bis 1,02 unter Umsetzung von 40 bis 90 % der verfügbaren Aminogruppen erhalten worden ist, beschichtet, und man anschließend bei Temperaturen >120°C, vorzugsweise bei 150 bis 160°C, die Umsetzung unter Vernetzung vervollständigt.

Die Vorteile der erfindungsgemäßen hitzehärtbaren Polyurethanharnstoffe zur Direkt- und Transferbeschichtung liegt vor allem darin, daß bei der Bereitung der Beschichtungspaste keine Vernetzer und/oder Härter und/oder Katalysatoren zugefügt werden müssen, somit für die verarbeitenden Beschichter eine problemlose Handhabung der Pasten möglich ist. Darüber hinaus hat der Verarbeiter keinerlei Topfzeitprobleme, da die Streichpasten bei Abwesenheit von Vernetzern und Katalysatoren keinen Viskositätsanstieg zeigen.

Der bei den Verfahrensprodukten gemäß der DE-OS 2 902 090 beobachtete starke thermische Viskositätsabfall vor der Reaktion der blockierten NCO-Prepolymeren mit dem Vernetzer-Polyamin, der dort in der Direktbeschichtung und Kaschierung Penetrationsprobleme bereitet, die durch spezielle Maßnahmen überspielt werden müssen, entfällt bei den erfindungsgemäßen Verfahrensprodukten. Ohne störende Penetration lassen sich diese zur Direktbeschichtung und als Haftstriche zur Kaschierung einsetzen.

Ein weiterer Vorteil ist die Kaschierbarkeit von Deckstrichen aus aromatischen 1-Komponenten-Polyurethanen mit DMF-freien Haftstrichen unter Vermeidung des sehr störenden "Eisblumeneffekts" infolge Anquellens.

Obwohl es prinzipiell möglich ist, beim erfindungsgemäßen Verfahren übliche Härter und/oder Vernetzer und/oder Katalysatoren zur Beschleunigung oder Vervollständigung der Härtungsreaktion zuzusetzen, arbeitet man vorzugsweise ohne diese Zusätze. Das erfindungsgemäße Verfahren kann sowohl zur Direkt- wie auch zur Transferbeschichtung Anwendung finden. Als zu beschichtende Substrate kommen insbesondere textile Flächengebilde und Leder in Betracht. Die Beschichtungszusammensetzung kann weiterhin Pigmente, Füllstoffe, Lösemittel und weitere für Beschichtungsmittel übliche Zusatzstoffe enthalten. Das Äquivalentverhältnis

von blockierten NCO-Gruppen zu $NH_2$-Gruppen beträgt vorzugsweise 1,18:1 bis 1,05:1.

Im ersten Kettenverlängerungsschritt, der bevorzugt bei 50 bis 120°C, besonders bevorzugt bei 70 bis 100°C, erfolgt, werden insbesondere 50 bis 70 % der verfügbaren Aminogruppen umgesetzt.

Für den Aufbau der ketoxim-blockierten NCO-Prepolymerisate kommen aromatische Diisocyanate, wie sie z.B. in den US-PSen 3 984 607 und 4 035 213, der DE-OS 2 402 840 bzw. DE-AS 2 457 387 beschrieben sind, in Frage.

Bevorzugt sind 2,4′- bzw. 4,4′-Diisocyanatodiphenylmethan, die isomeren Toluylendiisocyanate sowie insbesondere Gemische dieser Diisocyanate.

Als Reaktionspartner für diese Diisocyanate zur Herstellung der NCO-Prepolymerisate kommen z.B. Polyhydroxylverbindungen in Frage, die zwei Hydroxylgruppen aufweisen und ein Molekulargewicht von 500 bis 10 000, vorzugsweise 1000 bis 6000, haben und wie sie im Detail ebenfalls in den obengenannten publikationen beschrieben werden.

Bevorzugt sind die folgenden Polyhydroxykomponenten : Polyhydroxypolyether, z.B. 2 Hydroxygruppen aufweisende Polyether, wie Propylenoxid-Polyether, die Ethylenoxid-(CEOX)-Einheiten aufweisen, Propylenoxid-Polyether, die 30 bis 90 Gew.-% EOX-Einheiten aufweisen, Propylenoxid-Polyether, die 40 bis 80 Gew.-% EOX-Einheiten aufweisen, reine EOX-Polyether; Polyhydroxypolyester, z.B. unterhalb von 60°C schmelzende Hydroxypolyester mit 2 endständigen OH-Gruppen und einem mittleren Molekulargewicht von 1000 bis 6000; Gemische der genannten Polyhydroxypolyether mit Polyhydroxypolyestern, z.B. Hydroxypolyestern aus Adipinsäure, Hexandiol-1,6 und Neopentylglykol vom mittleren MG 1000 bis 3000 oder Hydroxypolycarbonate aus Hexandiol, Hydroxyethoxyhexanol, Hydroxypolycaprolacton und Diphenylcarbonat.

Der Polyetheranteil in den Mischungen beträgt bevorzugt 30 bis 99 Gew.-%, besonders bevorzugt 40 bis 90 Gew.-%.

Bei der Herstellung der NCO-Prepolymerisate können gegebenenfalls auch niedermolekulare Diole mit einem Molekulargewicht von weniger als etwa 300 mitverwendet werden, wie sie als Kettenverlängerungsmittel an sich bekannt sind. Bevorzugt sind in diesem Zusammenhang Butandiol-1,4 und Hexandiol-1,6.

Die Herstellung der NCO-Prepolymerisate erfolgt in an sich bekannter Weise, indem man die genannten Polyhydroxylverbindungen mit überschüssigem Diisocyanat, vorzugsweise bei ca. 70 bis 110°C umsetzt. Man wählt hierbei im allgemeinen ein NCO/OH-Verhältnis von 1,5:1 bis 6,0:1, vorzugsweise von 1,7:1 bis 2,5:1.

Als Blockierungsmittel für die NCO-Prepolymerisate kommen z.B. Ketoxime aus Hydroxylamin und Ketonen wie Aceton, Methylethylketon, Diethylketon, Cyclohexanon, Acetophenon und Benzophenon in Frage.

Bevorzugtes Blockierungsmittel ist Methylethylketoxim (Butanonoxim). Die Blockierungsreaktion wird z.B. in der Weise durchgeführt, daß man das NCO-Prepolymerisat mit stöchiometrischen Mengen an Ketoxim bei erhöhter Temperatur, z.B. 70 bis 100°C, bis zum Verschwinden der NCO-Gruppen umsetzt.

Die blockierten NCO-Prepolymeren werden erfindungsgemäß in Gegenwart von Lösemitteln bei Temperaturen >50°C mit den Kettenverlängerungsmitteln (B) im Unterschuß vor der Beschichtung des Substrats umgesetzt.

Als Lösemittel dienen, allein oder im Gemisch, z.B. Toluol, Xylol, Gemische alkylierter aromatischer Kohlenwasserstoffe, Propanole, Butanole, Amylalkohole, Methoxypropanol, Ethylacetat, Butylacetat, Methoxypropylacetat, DMF, Methylethylketon, Methylisobutylketon, Cyclohexanon.

Die Umsetzung der NCO-Prepolymeren (A) mit den Kettenverlängerungsmitteln (B) erfolgt z.B. in Konzentrationen von 30 bis 90 Gew.-%, bevorzugt 40 bis 70 Gew.-%, bei Temperaturen von vorzugsweise 50 bis 120°C, besonders bevorzugt 70 bis 100°C.

Das Äquivalentverhältnis der blockierten NCO-Gruppen in den Prepolymeren (A) zu den Amino-Gruppen der Kettenver längerungsmittel (B) liegt zwischen 1,43 bis 1,02, bevorzugt 1,18 bis 1,05. Als Kettenverlängerungsmittel für die NCO-Prepolymeren (A) eignen sich u.a. Ethylendiamin, Propylendiamin, 1,4-Cyclohexandiamin, 1,3-Cyclohexandiamin, Piperazin, Isophorondiamin, sowie insbesondere Diamine der Formel

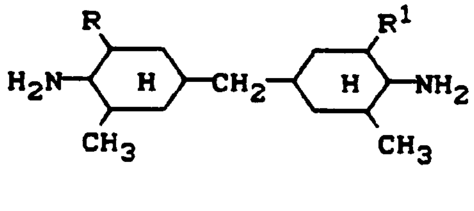

in der R, $R^1$ H oder $C_1$-$C_4$-Alkyl, vorzugsweise Methyl bezeichnen, wie 4,4′-Diaminodicyclohexylmethan und besonders bevorzugt 4,4′-Diamino-3,3′-dimethyl-dicyclohexylmethan, welches ein bei Raumtemperatur flüssiges Diamin mit sehr geringem Dampfdruck ist.

Zur Herstellung von gebrauchsfertigen Beschichtungsmassen durch den Beschichter können den erfindungsgemäßen Reaktivgemischen an sich bekannte Zuschläge, wie Pigmente, Lösemittel, UV-Stabilisatoren, Verlaufmittel, Antioxidantien, Füllstoffe oder gegebenenfalls Treibmittel, beigemischt werden.

Mit den hitzehärtbaren Reaktivgemischen können Beschichtungen auf den in der Praxis üblichen Beschichtungsanlagen sowohl nach dem Direkt- als auch nach dem Umkehrbeschichtungsverfahren hergestellt werden. Hierbei ist es möglich, in Abhängigkeit von dem jeweiligen spezifischen chemischen Aufbau des NCO-Prepolymerisates, eigenschaftsmäßig verschiedene Schichten wie z.B. eine Haft-, Zwischen- oder Deckschicht, zu erzeugen.

Zur Herstellung einer Umkehrbeschichtung kann man z.B. wie folgt vorgehen:

Man trägt zuerst auf einen geeigneten Zwischenträger, z.B. ein Trennpapier, das Reaktivgemisch für den Deckstrich in einer Menge von ca. 30 bis 100 g/m$^2$ auf, härtet im Trockenkanal aus, bringt auf den trockenen Deckstrich das Reaktivgemisch für den Haftstrich ebenfalls in einer Menge von ca. 30 bis 100 g/m$^2$ auf, kaschiert das Substrat hinzu, härtet die Beschichtung in einem weiteren Trockenkanal bei ca. 120 bis 190°C, vorzugsweise 150 bis 160°C, aus und zieht das beschichtete Substrat vom Trennträger ab. Selbstverständlich ist es aber auch möglich, nur den Deck- oder den Haftstrich aus den erfindungsgemäßen Beschichtungsmassen zu erzeugen und für den anderen Strich ein konventionelles Beschichtungssystem einzusetzen.

Wie schon erwähnt, können die Reaktivgemische auch im Direktstreichverfahren in einem oder mehreren Strichen auf das textile Substrat aufgebracht werden. Sie können mit Strichen aus 1- oder 2-Komponenten-PUR kombiniert werden.

Werden aus den erfindungsgemäßen Beschichtungsmassen Zwischenschichten hergestellt, dann setzt man ihnen gegebenenfalls beim Erhitzen Gase abspaltende Verbindungen als Treibmittel sowie zweckmäßigerweise auch Schaumstabilisatoren zu. Geeignete Zusätze werden z.B. in DE-OS 1 794 006 (GB-PS 1 211 339) sowie in US-PS 3 262 805 beschrieben.

## Beispiele

### Beispiel 1

#### Haftstrich (erfindungsgemäß)

520 g eines Polyethers der OHZ 28 aus Propylenoxid, gestartet auf Propylenglykol-1,2, und 15 Gew.-% Ethylenoxid, 400 g eines Polyethers der OHZ 56 aus Propylenoxid gestartet auf Propylenglykol-1,2, und 1340 g eines Adipinsäurepolyester der OHZ 56 mit der Mischung von Hexandiol-1,6 und Neopentylglykol (65:35) werden nach dem Entwässern mit 500 g 4,4′-Diisocyanatdiphenylmethan in 680 g Methoxypropylacetat bei 90°C umgesetzt. Die NCO-Gruppen des Prepolymeren werden bei 80 bis 90°C mit 206 g Butanonoxim blockiert. Nach Verdünnung mit 680 g Isobutanol liegt das blockierte NCO-Prepolymer als 68,6 %ige Lösung vor; NCO-Gehalt 1,9 %. Nunmehr werden die blockierten NCO-Gruppen mit 210 g 3,3′-Dimethyl-4,4′-diaminodicyclohexylmethan, das entspricht ca. 90 % der berechneten Menge, bei 90 bis 100°C in etwa 1 Stunde umgesetzt. Die entstehende 70 %ige Lösung eines Polyurethanharnstoffs mit einem Rest an blockierten NCO-Gruppen und einem Rest von Aminogruppen (der Basenstickstoff der Lösung beträgt 0,27 %) hat eine Viskosität von 25 000 mPa.s/25°C.

#### Deckstrich 1

500 g eines Polyesters aus Hexandiol/Neopentylglykol (Verhältnis 65/35) und Adipinsäure von der OH-Zahl 65 werden mit 140 g Isophorondiisocyanat bei 90°C zu einem NCO-Prepolymeren umgesetzt; dieses löst man in 800 g Toluol und tropft bei gutem Rühren bei 20°C eine Lösung von 60 g Isophorondiamin in 730 g Isopropanol und 100 g 1-Methoxypropanol-2 zu. Man erhält eine ca. 30 %ige Lösung von ca. 25 000 mPa.s bei 25°C.

#### Deckstrich 2

680 g eines Polyesters aus Butandiol-1,4 und Adipinsäure von der OH-Zahl 45 werden mit 255 g Diphenylmethan-4,4′-diisocyanat und 65 g Butandiol-1,4 in einer Reaktionsschnecke mit steigender Temperatur von 80 bis 180°C zum Polyurethan umgesetzt, extrudiert und unter Kühlung granuliert. 250 g dieses Granulats werden in einem Gemisch aus 375 g DMF und 375 g Toluol gelöst. Die 25 %ige Lösung hat eine Viskosität von ca. 10 000 mPa.s bei 25°C.

Deckstrich 3

2000 g eines Polyethers auf Basis von Trimethylolpropan und Propylenoxid mit einem Molekulargewicht von 6000, 1000 g eines linearen Polyethers auf Basis von Propylenglykol und Propylenoxid mit einem Molekulargewicht von 1000, 1450 g eines linearen Polyesters auf Basis von Hexandiol-1,6, Neopentylglykol und Adipinsäure vom Molekulargewicht 1700 sowie 22,5 g Butandiol-1,4 werden mit 1125 g 4,4′-Diisocyanatodiphenylmethan und 174 g 2,4-Diisocyanatotoluol ca. 3 Stunden lang bei 80 bis 90°C umgesetzt, bis der berechnete NCO-Gehalt von 4,26 Gew.-% knapp unterschritten ist. Anschließend werden bei 60 bis 70°C 496 g Butanonoxim sowie 696 g Propylenglykolmonomethyl-etheracetat rasch eingerührt. Nach 20 Minuten ist IR-spektroskopisch kein NCO mehr nachweisbar. Das blockierte NCO-Prepolymerisat, eine farblose, klare Flüssigkeit mit einer Viskosität von ca. 40 000 mPa.s bei 20°C, hat einen NCO-Gehalt von 3,3 Gew.-% und somit ein NCO-Äquivalentgewicht von 1280.

Deckstrich 4

| | |
|---|---|
| 485 g | Hexandioladipat (OH-Zahl 134) |
| 20 g | Trimethylolpropan |
| 85 g | propoxyliertes Addukt aus 2-Butendiol-1,4 und $NaHSO_3$ (Mol-Gewicht 425) |
| 365 g | 4,4′-Dicyclohexylmethandiisocyanat |
| 67 g | 1,6-Hexandiisocyanat |
| 50 g | Acetonazin |
| 107 g | N-Methylpyrrolidon |
| 1500 g | entsalztes Wasser |

Durchführung: gemäß DE-OS 28 11 148

Die so erhaltene Dispersion hat einen Feststoffgehalt von 40 %, eine Fordbecherviskosität (4 mm Düse) von 19 Sekunden und einen pH-Wert von 6,8.

1000 g dieser PUR-Dispersion werden nach Einstellung des pH-Werts auf 8 bis 9 mit Ammoniak konz. mit 15 g einer 25 %igen wäßrigen Polyacrylsäure-Lösung (Mirox®AM; Stockhausen) verdickt und mit 100 g einer Eisenoxidbraun-Paste (LEVANOX® Braun 610 A (Bayer AG) pigmentiert.

Beschichtung

1. Die 30 %ige Lösung eines aliphatischen Einkomponenten-PUR gemäß D1 wird mit 10 % einer handelsüblichen Pigmentpaste (z.B. BAYDERM® Farben B-TO/C-TO (Bayer)) pigmentiert. Per Walzenrakel erzeugt man auf Trennpapier unter Trocknung bei 60 bis 120°C einen Deckstrick von 30 g/m² Feststoffauflage. Am 2. Streichwerk rakelt man den 70 %igen Haftstrich auf, kaschiert ein CO/PES-Mischgewebe von 200 g/m² Warengewicht zu, trocknet bei 100 bis 140°C; vernetzt bei 150 bis 160°C. Haftstrichauflage: 40 g Feststoff/m². Ohne Zusatz von Vernetzern und/oder Katalysatoren liefert der 70 %ige Haftstrich einen lösemittel- und reinigungsbeständigen Beschichtungsartikel.
2. Die 25 %ige Lösung eines aromatischen Einkomponenten-PUR gemäß D2 wird mit 8 % einer handelsüblichen Pigmentpaste (z.B. BAYDERM® Farben B-TO/C-TO (Bayer)) pigmentiert. Der Deckstrich auf dem Trennpapier wird bei 90 bis 140°C getrocknet. Auflage: 27 g Feststoff/m². Analog 1. wird am 2. Streickwerk die 70 %ige DMF-freie Haftstrichlösung aufgebracht, Textil zukaschiert, getrocknet und vernetzt. Der mit üblichen Haftstrichen nicht ohne DMF-Anteil im Lösemittelgemisch kaschierbare Deckstrich läßt sich mit dem erfindungsgemäßen Haftstrich problemlos - ohne Auftreten von Eisblumen - kaschieren.
3. Das 90 %ige High-Solid-Prepolymer gemäß D3 wird mit 9,0 % 4,4′-Diamino-3,3′-dimethyldicyclohexylmethan als Vernetzer vermischt, mit 10% einer PVC-Weichmacher enthaltenden Farbpaste (z.B. Renol®-FV-Farbpasten (Hoechst)) pigmentiert; als Verlaufmittel wird 1 Gew.-% eines oxethylierten Dimethylpolysiloxans hinzugefügt. Mit dieser Streichpaste erzeugt man auf Trennpapier einen Deckstrich; Reaktionstemperatur 150 bis 160°C, Auflage: 60 g Feststof/m². Analog 1. wird am 2. Streichwerk die 70 %ige Haftmischlösung aufgebracht, Textil zukaschiert, getrocknet und vernetzt (150 bis 160°C).
4. Die 40 %ige Dispersionspaste gemäß D4 wird auf ein naßfestes Trennpapier per Walzenrakel aufgestrichen, Trocknung erfolgt bei 80 bis 140°C. Feststoffauflage: 25 g/m². Analog 1. wird am 2. Streichwert die 70 %ige Haftstrichlösung aufgerakelt, Textil zukaschiert, getrocknet und bei 150 bis 160°C vernetzt.

Beispiel 2

Deckstrich (erfindungsgemäß)

1340 g des in Beispiel 1 beschriebenen Polyesters (OHZ 56), 660 g des ebenfalls in Beispiel 1 beschriebenen Polyesters aus Propylenoxid (OHZ 56) werden nach dem Entwässern mit 500 g 4,4′-Diisocyanatodiphenylmethan in 1450 g Solvesso 100 bei 90°C umgesetzt. Bei 80 bis 90°C werden die NCO-Gruppen des NCO-Prepolymeren mit 206 g Butanonoxim blockiert. Nach Verdünnen mit 1000 g Isobutanol hat die Lösung des NCO-Prepolymeren eine Konzentration von 52,5 %, der (blockierte) NCO-Gehalt beträgt 1,6 %. Die blockierten NCO-Gruppen werden mit 190 g 4,4′-Diaminodicyclohexylmethan, gelöst in 450 g Isobutanol, bei 90 bis 120°C umgesetzt. Die 50 %ige Lösung dieses Polyurethanharnstoffs mit einem Rest von blockierten NCO-Gruppen (ca. 60 % der Gruppen sind umgesetzt) hat eine Viskosität von 10 000 mPa.s/25°C (Gehalt an Basenstickstoff 0,18 %).

Haftstrich (erfindungsgemäß)

4326 g der in Beispiel 1 beschriebenen 68,6 %igen Lösung eines blockierten NCO-Prepolymeren, blockierter NCO-Gehalt 1,9 % werden mit 51 g Ethylendiamin, das entspricht 85 % der berechneten Menge, bei 90 bis 100°C umgesetzt. Die entstehende Lösung des 68,9 %igen Polyurethanharnstoffs mit verbleibenden blockierten NCO-Gruppen und freien Aminogruppen (Basen-N: 0,32 %) hat eine Viskosität von 18 000 mPa.s/25°C.

Beschichtung

Die 50 %ige Deckstrichlösung wird mit 12 % einer handelsüblichen Pigmentpaste pigmentiert, per Walzenrakel auf Trennpapier gestrichen, Spaltbreite 0,1 mm, bei 100 bis 140°C getrocknet und bei 150 bis 160°C erfolgt die Vernetzung des Polyurethanharnstoffs.
Auflage: 35 g/m$^2$ Feststoff.
Am 2. Streichwerk rakelt man den ca. 69 %igen Haftstrich auf, kaschiert ein Polyestergewebe von 140 g/m$^2$ Warengewicht zu, trocknet bei 100 bis 140°C, vernetzt bei 150 bis 160°C. Gesamtauflage Deck- und Haftstrich 75 g/m$^2$.

Beispiel 3

Deckstrich:

600 g eines Polycarbonats aus Hexandiol-1,6 und Diphenylcarbonat, OHZ 56, und 1400 g eines Polyethers aus Ethylenoxid, OHZ 56, werden nach dem Entwässern mit 1000 g 4,4′-Diisocyanatodiphenylmethan bei 60 bis 80°C umgesetzt. Nach dem Lösen des Prepolymers in 3050 g DMF und 4580 g Toluol fügt man 270 g Butandiol-1,4 hinzu und läßt bei 70°C 6 h reagieren. Die 30 %ige Lösung hat eine Viskosität von 37 000 mPa.s/25°C. Ein aus dieser Lösung hergestellter Film von der Dicke 26/µ hat eine Wasserdampfdurchlässigkeit gemessen nach IUP15 von 4,5 mg/cm$^2$ h.

Haftstrich (erfindungsgemäß)

520 g des in Beispiel 1 beschriebenen Polyethers aus Propylenoxid/Ethylenoxid, OHZ 28, 1740 g eines Polyethers aus Ethylenoxid, OHZ 56, werden nach dem Trocknen mit 500 g 4,4′-Diisocyanatodiphenylmethan bei 90°C umgesetzt; die NCO-Gruppen des Prepolymeren werden mit 206 g Butanonoxim, gelöst in 825 g Methoxypropylacetat bei 80 bis 90°C verschlossen. Nach Verdünnung mit 825 g Methoxypropanol liegt das blockierte NCO-Prepolymer als 64,3 %ige Lösung vor, blockierter NCO-Gehalt 1,82 %. Die blockierten NCO-Gruppen werden zu 90 % mit 103 g 1,4-Diaminocyclohexan bei 90 bis 100°C in 30 min umgesetzt. Die 65 %ige Lösung hat einen Basen-Stickstoff von 0,2 % und eine Viskosität von 18 000 mPa.s/25°C.

Ein hieraus hergestellter Film, kondensiert 1 min bei 150 bis 160°C, einer Stärke von 30 µ, hat eine Wasserdampfdurchlässigkeit von 4 mg/m$^2$ h.

Beschichtung

Die 30 %ige Deckstrichlösung wird mit 10 % einer handelsüblichen Farbpaste BAYDERM Farben F-TO/C-TO (Bayer) pigmentiert. Auf einem glatt-matten Papier wird mittels Walzenrakel ein Deckstrich erzeugt mit einer

Feststoffauflage von 28 g/m². Auf diesen Deckstrich wird die 65 %ige Haftstrichlösung gerakelt. Naßauflage ca. 100 g/m². Man kaschiert ein Baumwoll/Zellwollgewebe von 150 g/m² Warengewicht auf, trocknet bei 110 bis 140°C und kondensiert bei 150 bis 160°C.

Der Beschichtungsartikel hat eine Gesamtauflage von ca. 90 g/m² und weist dabei eine Wasserdampfdurchlässigkeit von 3,5 mg/cm² h auf (IUP 15).

Beispiel 4

Dreistrichtransferbeschichtung von Spaltleder

Aus dem aliphatischen Einkomponenten-PUR gemäß Beispiel 1/D1 wird wie in B1 beschrieben ein Deckstrich auf geprägtem Trennpapier von 30 g/m² Feststoffauflage hergestellt. Auf diesen Deckstrich rakelt man einen Zwischenstrich unter Verwendung des in Beispiel 1 beschriebenen erfindungsgemäßen 70 %igen Haftstrichs. Trocknen bei 100 bis 140°C, vernetzen bei 150 bis 160°C, Feststoffauflage ca. 100 g/m². Als Haftstrich dient eine 35 %ige PUR-Lösung von DMF/MEK (Herstellung siehe unten).

In den naßen Haftstrich wird das Spaltleder eingelegt, angepreßt und getrocknet. Die Gesamtauflage PUR-Feststoff beträgt ca. 170 g/m².

Haftstrich

706 g eines 1,2-Propylenglykolpolyethers von der OH-Zahl 56 werden mit 240 g Diphenylmethan-4,4′-diisocyanat in 660 g Toluol bei 100°C zum NCO-Prepolymeren umgesetzt und nach Zugabe von 54 g Butandiol-1,4 in 700 g DMF und 500 g Methylethylketon bei 80°C zum Polyurethan aufgebaut. Die 35 %ige Lösung hat eine Viskosität von ca. 25 000 mPa.s/25°C.

Beispiel 5

Streichpaste für Direktbeschichtung (erfindungsgemäß)

Die in Beispiel 1/Haftstrich genannten Mengen an Polyhydroxyverbindungen werden mit der dort genannten Menge 4,4′-Diisocyanatodiphenylmethan bei 90°C in 1100 g Solvesso 100 umgesetzt; die NCO-Gruppen des NCO-Prepolymeren werden sodann bei 80 bis 90°C mit 210 g Butanonoxim blockiert. Nach Verdünnen mit 1100 g tert.-Butanol liegt das blockierte NCO-Prepolymer als 57,4 %ige Lösung vor, NCO-Gehalt 1,62 %. Jetzt werden die blockierten NCO-Gruppen mit einem Gemisch aus 129 g 3,3′-Dimethyl-4,4′-diaminodicyclohexylmethan und 61 g Isophorondiamin, entsprechend 90 % der berechneten Menge, bei 90 bis 100°C umgesetzt. Die 60 %ige Lösung des Polyurethanharnstoffs mit restlichen blockierten NCO-Gruppen und einem Basen-Stickstoff von 0,2 % hat eine Viskosität von 18 000 mPa.s/25°C.

Ein leichtes Polyamidgewebe von 60 g/m² Gewicht wird mit 15 g/l eines Fluoralkylacrylat-Copolymers (z.B. XERODERM WF® (Bayer AG)) ausgerüstet. Das so vorbehandelte Gewebe wird im Direktstreichverfahren per Luftrakel mit der o.g. 60 %igen Streichpaste beschichtet, bei 110 bis 140°C getrocknet. Per Walzenrakel wird ein zweiter, stärkerer Strich aufgebracht, wieder bei 110 bis 140°C getrocknet und die gesamte PUR-Schicht bei 150 bis 160°C vernetzt. Die Auflage beträgt 30 g/m².

## Patentansprüche

1. Verfahren zur Beschichtung mit Polyurethanharnstoffen, dadurch gekennzeichnet, daß man ein Substrat mit einem Produkt, das durch Reaktion A) eines durchschnittlich 2 ketoxim-blockierte NCO-Gruppen aufweisenden Prepolymers mit einem durchschnittlichen Molekulargewicht von 500 bis 15 000 auf Basis eines aromatischen Polyisocyanats mit B) einem Kettenverlängerer der formel

$$H_2N\text{-}R'\text{-}NH_2,$$

in der R′ für einen aliphatischen Rest steht, in Gegenwart von Lösungsmitteln bei temperaturen >50° C und bei einem Äquivalentverhältnis von blockierten NCO-Gruppen zu $NH_2$-Gruppen von 1,43 bis 1,02 unter Umsetzung von 40 bis 90 % der verfügbaren Amino-gruppen erhalten worden ist, beschichtet, brocknet und man anschließend bei temperaturen >120°C die Umsetzung unter Vernetzung vervollständigt.

2. Verfahren gemäß Anspruch 1, dadurch gekennzeichnet, daß bei der Beschichtung für Beschichtungsmittel übliche Zusatzstoffe mitverwendet werden.

3. Verfahren gemäß den Ansprüchen 1 bis 2, dadurch gekennzeichnet, daß man mit einem Äquivalent verhältniss von blockierten NCO-Gruppen zu $NH_2$-Gruppen von 1,18:1 bis 1,05:1 arbeitet.

4. Verfahren gemäß den Ansprüchen 1 bis 3, dadurch gekennzeichnet, daß man unter Umsetzung von 50 bis 70 % der Aminogruppen arbeitet.

5. Verfahren gemäß den Ansprüchen 1 bis 4, dadurch gekennzeichnet, daß man einen Kettenverläüngerer der Formel

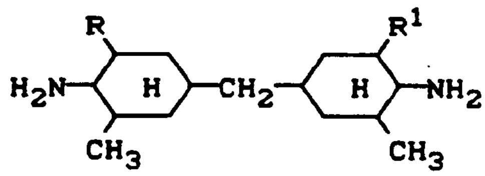

in der
R, $R^1$ H oder $C_1$-$C_4$-Alkyl, bedeuten, einsetzt.

6. Verfahren gemäß den Ansprüchen 1 bis 5, dadurch gekennzeichnet, daß die Umsetzung von A) mit B) bei 50 bis 120°C, erfolgt.

7. Verfahren gemäß den Ansprüchen 1 bis 6, dadurch gekennzeichnet, daß man die Umsetzung bei 150 bis 160°C vervollständigt.

8. Verfahren gemäß den Ansprüchen 1 bis 7, dadurch gekennzeichnet, daß die NCO-Gruppen aufweisenden Prepolymere aus Polyhydroxypolyethern und/oder Polyhydroxypolyestern aufgebaut sind.

9. Verfahren gemäß den Ansprüchen 1 bis 7, dadurch gekennzeichnet, daß die NCO-Gruppen aufweisenden Prepolymere aus Gemischen von Polyhydroxypolyethern mit Polyhydroxypolyestern, in denen der Polyetheranteil 30 bis 99 Gew.-% beträgt, aufgebaut sind.

10. Gemäß dem Verfahren der Ansprüche 1 bis 9 beschichtete Substrate, insbesondere textile Flächengebilde und Leder.

## Claims

1. Process for coating with polyurethane-ureas, characterised in that a substrate is coated with a product obtained by reacting A) a prepolymer containing on average 2 ketoxime-blocked NCO groups, having a average molecular weight of 500 to 15,000 and being based on an aromatic polyisocyanate with B) a chainlengthening agent of the formula

$$H_2N\text{-}R'\text{-}NH_2$$

in which R′ represents an aliphatic radical, in the presence of solvents at temperatures of >50°C with an equivalent ratio of blocked NCO groups to $NH_2$ groups of 1.43 to 1.02 with conversion of 40 to 90% of the available amino groups, and dried and the reaction is then completed at temperatures of >120°C by crosslinking.

2. Process according to Claim 1, characterised in that coating is carried out using in addition customary additives for coating agents.

3. Process according to Claims 1 and 2, characterised in that the reaction is carried out with an equivalent ratio of blocked NCO groups to $NH_2$ groups of 1.18:1 to 1.05:1.

4. Process according to Claims 1 to 3, characterised in that the reaction is carried out with conversion of 50 to 70% of the amino groups.

5. Process according to Claims 1 to 4, characterised in that the chain-lengthening agent used has the formula

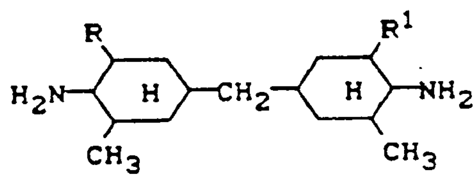

in which

R, $R^1$ denote H or $C_1$-$C_4$-alkyl.

6. Process according to Claims 1 to 5, characterised in that the reaction of A) with B) is carried out at 50 to 120°C.

7. Process according to Claims 1 to 6, characterised in that the reaction is completed at 150 to 160°C.

8. Process according to Claims 1 to 7, characterised in that the prepolymers containing NCO groups have been synthesised from polyhydroxy polyethers and/or polyhydroxy polyesters.

9. Process according to Claims 1 to 7, characterised in that the prepolymers containing NCO groups have been synthesised from mixtures of polyhydroxy polyethers with polyhydroxy polyesters in which the polyether content is 30 to 99% by weight.

10. Substrates coated in accordance with the process of Claims 1 to 9, in particular textile sheet-like structures and leather.

**Revendications**

1. Procédé d'enduction avec des polyuréthanecarbamides, caractérisé en ce qu'un substrat est enduit avec un produit qui est obtenu par la réaction A) d'un prépolymère présentant en moyenne 2 radicaux NCO bloqués par cétoxime d'un poids moléculaire moyen de 500 à 15.000 à base d'un polyisocyanate aromatique avec B) un agent d'allongement de la chaîne de formule

$$H_2N\text{-}R'\text{-}NH_2$$

dans laquelle R' désigne un radical aliphatique, en présence de solvants à des températures supérieures à 50°C et à un rapport d'équivalent des radicaux NCO bloqués aux radicaux $NH_2$ de 1,43 à 1,02 faisant réagir 40 à 90% des radicaux amino disponibles, le substrat est ensuite séché et la réaction est achevée à des températures supérieures à 120°C par réticulation.

2. Procédé selon la revendication 1, caractérisé en ce que les additifs classiques peuvent être incorporés au produit d'enduction lors de l'enduction.

3. Procédé selon les revendications 1 à 2, caractérisé en ce qu'on procède avec un rapport d'équivalent des radicaux NCO bloqués aux radicaux $NH_2$ de 1,18:1 à 1,05:1.

4. Procédé selon les revendications 1 à 3, caractérisé en ce que l'on procède en faisant réagir 50 à 70% des radicaux amino.

5. Procédé selon les revendications 1 à 4, caractérisé en ce que l'on utilise un agent d'allongement de la chaîne de formule

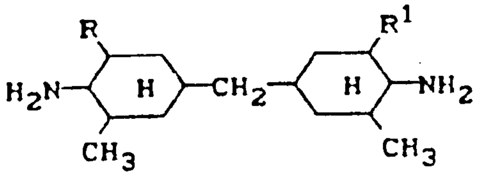

dans laquelle

R et $R^1$ désignent H ou un radical alkyle $C_1$-$C_4$.

6. Procédé selon les revendications 1 à 5, caractérisé en ce que la réaction de A) avec B) est effectuée à une température de 50 à 120°C.

7. Procédé selon les revendications 1 à 6, caractérisé en ce que la réaction s'achève à une température de 150 à 160°C.

8. Procédé selon les revendications 1 à 7, caractérisé en ce que les prépolymères présentant des radicaux NCO se composent de polyhydroxypolyéthers et/ou de polyhydroxypolyesters.

9. Procédé selon les revendications 1 à 8, caractérisé en ce que les prépolymères présentant des radicaux NCO se composent de mélange de polyhydroxypolyéthers avec des polyhydroxypolyesters, dans lesquels la part de polyéther s'élève de 30 à 99% en poids.

10. Substrat enduit selon le procédé des revendications 1 à 9, en particulier des produits textiles plats et du cuir.